# EUROPÄISCHE PATENTSCHRIFT

(11) **EP 0 608 754 B1**
(45) Veröffentlichungstag und Bekanntmachung des Hinweises auf die Patenterteilung: **01.10.1997**
(21) Anmeldenummer: 94100644.7
(22) Anmeldetag: 18.01.1994
(51) Int. Cl.: C08G 18/66, C08G 18/08, C08J 9/12

(54) **Verfahren zur Herstellung von Urethan- und Isocyanuratgruppen aufweisenden Hartschaumstoffen und ihre Verwendung als Dämmaterialien**
Process for the preparation of rigid foams showing urethane and isocyanurate groups and their use as insulating materials
Procédé de préparation de mousses rigides ayant des groupements uréthane et isocyanurate et leur utilisation comme matériaux isolants

(30) Priorität: 29.01.1993 DE 4302460
(43) Veröffentlichungstag der Anmeldung: 03.08.1994
(73) Patentinhaber: BAYER AG, 51368 Leverkusen (DE)
(72) Erfinder: Wiedermann, Rolf, Dr., D-51519 Odenthal (DE); Wendel, Stephan, Dr., D-51373 Leverkusen (DE); Weber, Ulrich, Dr., D-51381 Leverkusen (DE)

(56) Entgegenhaltungen:
- EP-A- 0 389 011
- EP-A- 0 394 769
- WO-A-92/16573

## Beschreibung

Die vorliegende Erfindung betrifft ein Verfahren zur Herstellung flammgeschützter, FCKW-freier Urethan- und Isocyanuratgruppen aufweisender Hartschaumstoffe.

In DE-OS 4109076, DE-OS 4026702, DE-OS 4129285, DE-OS 4020283 sowie EP-A 0421269 werden Verfahren zur Herstellung von halogenfreien PUR-Hartschaumstoffen unter Verwendung von Wasser und Kohlenwasserstoffen beschrieben. Die Verwendung von Wasser als Treibmittel hat den Nachteil, daß durch die Bildung von Polyharnstoff-Strukturen als Folge der Reaktion von Isocyanat mit Wasser unter Freisetzung von Kohlendioxid die Oberfläche von PUR-Schaumstoffen versprödet (Oberflächenssprödigkeit), wodurch die Haftung zwischen Schaumstoff und Deckschicht negativ beeinflußt wird.

Durch die alleinige Verwendung von Kohlenwasserstoffen als Treibmittel wird die Oberflächensprödigkeit zwar verhindert, zum Erhalt der Flammwidrigkeit muß jedoch der Anteil an Flammschutzmitteln, die üblicherweise als Weichmacher wirken, erhöht werden, so daß rein Kohlenwasserstoff-getriebene PUR-Hartschaumstoffe im allgemeinen nicht dimensionsstabil sind und Schrumpf/Schwund, besonders mit Cyclopentan als Treibmittel, zeigen. Außerdem neigen rein n-/iso-Pentan getriebene PUR-Schaumstoffe zum Abblasen.

Man hat bereits gefunden, daß durch die Verwendung von Polyolen mit verzweigten Ketten rein Kohlenwasserstoff-getriebene PUR-Hartschaumstoffe, ohne daß die Flammwidrigkeit (Flammfestigkeit) negativ beeinflußt wird, dimensionsstabil sind.

Überraschenderweise wurde nun festgestellt, daß bei der Verwendung von geeigneten Kohlenwasserstoff-Mischungen als Treibmittel die verwendeten Polyole nicht notwendigerweise verzweigte Ketten aufweisen müssen, um dimensionsstabile Schaumstoffe zu ergeben. Geeignete Kohlenwasserstoff-Mischungen sind Mischungen von n- und/oder i-Pentan und Cyclopentan, die 1 bis 50 Gew.-% Cyclopentan enthalten.

Gegenstand der Erfindung ist ein Verfahren zur Herstellung von Urethan- und Isocyanuratgruppen aufweisenden Hartschaumstoffen durch Umsetzung von
a) Polyisocyanaten mit
b) Verbindungen mit mindestens zwei gegenüber Isocyanaten reaktionsfähigen Wasserstoffatomen vom Molekulargewicht 400 bis 10.000 und
c) gegebenenfalls Verbindungen mit mindestens zwei gegenüber Isocyanaten reaktionsfähigen Wasserstoffatomen und einem Molekulargewicht von 32-399, in Gegenwart von
d) NCO-Trimerisierungskatalysatoren und
e) Mischungen von Kohlenwasserstoffen als Treibmittel und gegebenenfalls
f) Flammschutzmitteln, weiteren Treibmitteln und weiteren an sich bekannten Hilfs- und Zusatzstoffen
dadurch gekennzeichnet, daß als Mischungen von Kohlenwasserstoffen Mischungen von n-Pentan und/oder Isopentan mit Cyclopentan verwendet werden, wobei die Mischung 1 bis 50 Gew.-% Cyclopentan enthält.

Erfindungsgemäß bevorzugt ist, daß
- man eine Mischung aus n-Pentan und Cyclopentan, die 1 bis 50 Gew.-% Cyclopentan enthält, und zusätzlich Wasser als Treibmittel einsetzt,
- auf 100 Gew.-Teile der Komponente b) 1 bis 5 Gew.-Teile Wasser mitverwendet werden.

Die Erfindung betrifft auch die Verwendung der Urethan- und Isocyanuratgruppen aufweisenden Hartschaumstoffe als Dämmaterialien.

Die Herstellung von Urethan- und Isocyanuratgruppen aufweisenden Schaumstoffen ist an sich bekannt und z.B. in DE-PS 11 12 285, GB-PS 11 04 394, DE-OS 15 95 844 und 17 69 023 sowie im Kunststoff-Handbuch Band VII, Polyurethane, herausgegeben von Vieweg und Höchtlen, Carl-Hanser-Verlag München 1966 sowie in der Neuauflage dieses Buches, herausgegeben von G. Oertel, Carl-Hanser-Verlag München, Wien 1983, beschrieben.

Für die Herstellung der Schaumstoffe werden eingesetzt:
a) Als Ausgangskomponenten aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche Formel

   Q(NCO)ₙ

   in der
   n = 2-4, vorzugsweise 2-3, und
   Q einen aliphatischen Kohlenwasserstoffrest mit 2-18, vorzugsweise 6-C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen oder einen araliphatischen Kohlenwasserstoffrest mit 8-15, vorzugsweise 8-13 C-Atomen bedeuten, z.B. solche Polyisocyanate, wie sie in der DE-OS 28 32 253, Seiten 10-11, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sich durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4-und/oder 2,6-Toluylendiisocyanat bzw. vom 4,4'-und/oder 2,4'-Diphenylmethandiisocyanat ableiten.
b) Ausgangskomponenten sind ferner Verbindungen mit mindestens zwei gegenüber Isocyanaten reaktionsfähigen Wasserstoffatomen von einem Molekulargewicht in der Regel von 400-10.000. Hierunter versteht man neben Aminogruppen, Thiogruppen oder Carboxylgruppen aufweisende Verbindungen vorzugsweise Hydroxylgruppen aufweisende Verbindungen, insbesondere 2 bis 8 Hydroxylgruppen aufweisende Verbindungen, speziell solche vom Molekulargewicht 1.000 bis 6.000, vorzugsweise 2.000 bis 6.000, z.B. mindestens 2, in der Regel 2 bis 8, vorzugsweise aber 2 bis 6 Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der DE-OS 28 32 253, Seiten 11-18, beschrieben werden.
c) Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen.
   Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19-20, beschrieben.
d) Erfindungsgemäß werden die an sich bekannten NCO-Trimerisierungskatalysatoren mitverwendet.
e) Als Treibmittel werden Mischungen von Pentan und/oder Isopentan mit Cyclopentan verwendet, wobei die Mischung 1 bis 50 Gew.-% C yclopentan enthält.
f) Gegebenenfalls werden Hilfs- und Zusatzmittel mitverwendet wie
   - weitere leicht flüchtige organische Substanzen und/oder Wasser als zusätzliche Treibmittel,
   - zusätzliche Katalysatoren der aus der Polyurethanchemie an sich bekannten Art in Mengen von bis zu 10 Gew.-%, bezogen auf die Mengen an Komponente b)
   - oberflächenaktive Zusatzstoffe, wie Emulgatoren und Schaumstabilisatoren,
   - Flammschutzmittel, z.B. phosphorhaltige, halogenfreie Flammschutzmittel wie Triethylphosphat, Diphenylkresylphosphat, roter Phosphor,
   - Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Diese gegebenenfalls mitzuverwendenden Hilfs- und Zusatzstoffe werden beispielsweise in der DE-OS 27 32 292, Seiten 21-24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113 beschrieben.

Durchführung des Verfahrens zur Herstellung der Schaumstoffe:

Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121-205 beschrieben.

Erfindungsgemäß wird oft bei einer Kennzahl über 150, vorzugsweise von 200-400, gearbeitet.

Die Schaumstoffe können durch Blockverschäumung oder nach dem an sich bekannten Doppeltransportbandverfahren hergestellt werden.

Die nach der Erfindung erhältlichen Produkte finden z.B. als Dämmplatten für die Dachisolierung Anwendung.

### Ausführungsbeispiele

### Ausgangsprodukte

### Polyol A

Es wurde eine Mischung (Formulierung) folgender Komponenten hergestellt:
100 Gew.-Teile eines Polyolgemisches der OH-Zahl 198, bestehend aus:
45 Gew.-Teilen eines Polyethers mit der OH-Zahl 185, hergestellt durch Umsetzung von Ethylenglykol mit Ethylenoxid
8 Gew.-Teilen Diethylenglykol mit der OH-Zahl 1060
5 Gew.-Teilen eines Polyesters, hergestellt durch Umsetzung von Phthalsäureanhydrid mit Benzylalkohol und Butanol (OH-Zahl 0)
27 Gew.-Teilen des handelsüblichen Flammschutzmittels Disflamoll® DPK (Ciba Geigy Plastics an Additives Co.)
15 Gew.-Teilen eines Polyesters mit der OH-Zahl 200, hergestellt durch Umsetzung von Adipinsäure und Phthalsäureanhydrid mit Diethylenglykol

### Polyol B:

Es wurde eine Mischung (Formulierung) folgender Komponenten hergestellt:
100 Gew.-Teile eines Polyolgemisches der OH-Zahl 228, bestehend aus:
12 Gew.-Teile eines Polyesterpolyols mit der OH-Zahl 300, hergestellt durch Umsetzung von Phthalsäureanhydrid mit Diethylenglykol und Ethylenoxid
25 Gew.-Teilen eines Polyethers mit der OH-Zahl 180, hergestellt durch Umsetzung von Ethylenglykol mit Ethylenoxid
10 Gew.-Teilen eines Polyesters, hergestellt durch Umsetzung von Phthalsäureanhydrid mit Benzylalkohol und Butanol (OH-Zahl 0)
27 Gew.-Teilen des Flammschutzmittels DEEP (Diethylethylphosphonat)
15 Gew.-Teilen eines Polyesters mit der OH-Zahl 200, hergestellt durch Umsetzung von Adipinsäure und Phthalsäureanhydrid mit Diethylenglykol
11 Gew.-Teilen Diethylenglykol (OH-Zahl 1060)

**Tabelle 1**

| Rezeptur in Gew.-Teilen | | | | | | | |
|---|---|---|---|---|---|---|---|
| Beispiele | V1 | V2 | 3 | 4 | V2A | 3A | 3B |
| Polyol A | 98 | 98 | 98 | 98 | 98 | 98 | 98 |
| Dimethylcyclohexalamin | 0,14 | 0,18 | 0,14 | 0,18 | 0,18 | 0,14 | 0,2 |
| Kaliumacetat-Lösung¹⁾ | 0,54 | 0,7 | 0,54 | 0,7 | 0,7 | 0,54 | 0,54 |
| Wasser | - | - | - | - | - | - | 1 |
| Cyclopentan | 8 | 12,5 | - | - | - | - | - |
| Cyclopentan/n-Pentan (80/20/Gew.-%) | - | - | - | - | 12,5 | - | - |
| Cyclopentan/n-Pentan (15/85/Gew.-%) | - | - | 8 | 12,5 | - | - | - |
| Cyclopentan/n-Pentan (40/60/Gew.-%) | - | - | - | - | - | 8 | 4 |
| Stabilisator B1605 (Bayer AG) | 2 | 2 | 2 | 2 | 2 | 2 | 2 |
| Polyisocyanat (Roh-MDI, Desmodur® 44V20, (NCO-Gehalt 31,5 Gew.-%) Bayer AG, Leverkusen) | 103 | 166 | 103 | 166 | 166 | 103 | 118 |
| Kennzahl | 219 | 351 | 219 | 351 | 351 | 219 | 219 |
| Rohdichte [kg/m³] | 42 | 39 | 42 | 40 | 39 | 41 | 42 |
| Haftung der Papierdeckschicht nach 24 Stunden | gut | gut | gut | gut | gut | gut | gut |
| Ø Flammenhöhe im Kleinbrennertest DIN4102 [mm] | 130 | 120 | 130 | 120 | 122 | 131 | 135 |
| Klassifizierung nach DIN 4102 | B2 | B2 | B2 | B2 | B2 | B2 | B2 |
| Dimensionsstabilität | Schrumpf | Schrumpf | kein Schrumpf | kein Schrumpf | Schrumpf | kein Schrumpf | kein Schrumpf |
| Oberflächensprödigkeit | keine | keine | keine | keine | keine | keine | keine |

| | | | | | | | |
|---|---|---|---|---|---|---|---|
| ¹⁾ 25 %ige Lösung in Diethylenglykol V : Vergleichsbeispiel | | | | | | | |

Die Beispiele in Tabelle 1 zeigen, daß bei der Verwendung von Mischungen kleiner 50 Gew.-% Cyclopentan und größer 50 Gew.-% n-Pentan als Treibmittel dimensionsstabile PU-Hartschaumstoffe auch in Verbindung mit Wasser als Treibmittel erhalten werden.

**Tabelle 2**

| Rezeptur in Gew.-Teilen | | |
|---|---|---|
| Beispiele | 5 | 6 |
| Polyol B | 100 | 100 |
| Dimethylcyclohexylamin | 0,85 | 0,85 |
| Kaliumacetat-Lösung ²⁾ | 2,4 | 2,4 |
| n-Pentan/Cyclopentan (85/15/Gew.-%) | 8,5 | - |
| n-Pentan/Cyclopentan (60/40/Gew.-%) | - | 8,5 |
| Polyisocyanat (Roh-MDI Desmodur® 44P75, Bayer AG) (NCO-Gehalt 28 Gew.-%) | 230 | 230 |
| Kennzahl | 271 | 271 |
| Rohdichte [kg/m³] | 37,5 | 37,0 |
| Haftung der Papierdeckschicht nach 24 Stunden | gut | gut |
| Klassifizierung nach DIN 4102 | B2 | B2 |
| Dimensionsstabilität | kein Schrumpf | kein Schrumpf |
| Oberflächensprödigkeit | keine | keine |

| | | |
|---|---|---|
| ²⁾ 40 %ige wäßrige Lösung | | |

Das Beispiel 5 und 6 in Tabelle 2 zeigt, daß bei Verwendung von Mischungen aus größer 50 Gew.-% n-Pentan / und kleiner 50 Gew.-% Cyclopentan in Verbindung mit Wasser als Treibmittel, dimensionsstabile Polyurethan-Hartschaumstoffe erhalten werden.

## Patentansprüche

1. Verfahren zur Herstellung von Urethan- und Isocyanuratgruppen aufweisenden Hartschaumstoffen durch Umsetzung von
a) Polyisocyanaten mit
b) Verbindungen mit mindestens zwei gegenüber Isocyanaten reaktionsfähigen Wasserstoffatomen vom Molekulargewicht 400 bis 10.000 und
c) gegebenenfalls Verbindungen mit mindestens zwei gegenüber Isocyanaten reaktionsfähigen Wasserstöffatomen und einem Molekulargewicht von 32-399, in Gegenwart von
d) NCO-Trimerisierungskatalysatoren und
e) Mischungen von Kohlenwasserstoffen als Treibmittel und gegebenenfalls
f) weiteren Treibmitteln und an sich bekannten Hilfs- und Zusatzstoffen,
dadurch gekennzeichnet, daß als Mischungen von Kohlenwasserstoffen Mischungen von n-Pentan und/oder Isopentan mit Cyclopentan verwendet werden, wobei die Mischung 1 bis 50 Gew.-% Cyclopentan enthält.

2. Verfahren gemäß Anspruch 1, dadurch gekennzeichnet, daß man eine Mischung aus n-Pentan und Cyclopentan, die 1 bis 50 Gew.-% Cyclopentan enthält, und zusätzlich Wasser als Treibmittel einsetzt.

3. Verfahren nach Anspruch 2, dadurch gekennzeichnet, daß auf 100 Gew.-Teile der Komponente b) 1 bis 5 Gew.-Teile Wasser mitverwendet werden.

4. Verwendung der gemäß Ansprüchen 1 bis 3 erhaltenen Urethan- und Isocyanuratgruppen aufweisenden Hartschaumstoffe als Dämmaterialien.

## Claims

1. Process for the production of rigid foams containing urethane and isocyanurate groups by reacting
a) polyisocyanates with
b) compounds having at least two isocyanate-reactive hydrogen atoms and a molecular weight of 400 to 10,000 and
c) optionally compounds having at least two isocyanate-reactive hydrogen atoms and a molecular weight of 32-399, in the presence of
d) NCO trimerisation catalysts and
e) mixtures of hydrocarbons as a blowing agent and optionally
f) further blowing agents and *per se* known auxiliary substances and additives,
characterised in that mixtures of n-pentane and/or isopentane with cyclopentane are used as the mixtures of hydrocarbons, wherein the mixture contains 1 to 50 wt.% of cyclopentane.

2. Process according to claim 1, characterised in that a mixture of n-pentane and cyclopentane containing 1 to 50 wt.% of cyclopentane and additionally water is used as the blowing agent.

3. Process according to claim 2, characterised in that 1 to 5 parts by weight of water are additionally used per 100 parts by weight of component b).

4. Use of the rigid foams containing urethane and isocyanurate groups obtained according to claims 1 to 3 as insulating materials.

## Revendications

1. Procédé pour la préparation de mousses dures présentant des groupes uréthane et isocyanurate, par mise en réaction
a) de polyisocyanates avec
b) des composés contenant au moins deux atomes d'hydrogène aptes à réagir vis-à-vis d'isocyanates, possédant un poids moléculaire de 400 à 10.000, et
c) éventuellement des composés contenant au moins deux atomes d'hydrogène aptes à réagir vis-à-vis d'isocyanates et possédant un poids moléculaire de 32-399, en présence
d) de catalyseurs de trimérisation contenant des groupes NCO, et
e) de mélanges d'hydrocarbures à titre d'agents moussants et, le cas échéant,
f) d'autres agents moussants, ainsi que d'autres adjuvants et additifs connus en soi,
caractérisé en ce qu'on utilise comme mélanges d'hydrocarbures, des mélanges de n-pentane et/ou d'isopentane avec du cyclopentane, le mélange contenant du cyclopentane à concurrence de 1 à 50% en poids.

2. Procédé selon la revendication 1, caractérisé en ce qu'on met en oeuvre un mélange de n-pentane et de cyclopentane, qui contient du cyclopentane à concurrence de 1 à 50% en poids, et en outre de l'eau comme agent moussant.

3. Procédé selon la revendication 2, caractérisé en ce que, pour 100 parties en poids du composant b), on utilise conjointement de l'eau à concurrence de 1 à 5 parties en poids.

4. Utilisation des mousses dures présentant des groupes uréthane et isocyanurate, obtenues conformément aux revendications 1 à 3, comme matières isolantes.
